# EUROPEAN PATENT APPLICATION

(11) **EP 4 663 967 A1**
(43) Date of publication of application: **17.12.2025**
(21) Application number: 24182332.7
(22) Date of filing: 14.06.2024
(51) Int. Cl.: F16D 48/06

(54) **METHOD FOR ESTIMATING A CLUTCH SLIPPING POINT POSITION**

(71) Applicant: VOLVO TRUCK CORPORATION, 405 08 Göteborg (SE)
(72) Inventor: BLANCKENFIELL, Magnus, 425 42 GÖTEBORG (SE); ANDERSSON, Henrik, 435 30 MÖLNLYCKE (SE); OLESEN, Oscar, 416 57 GÖTEBORG (SE)
(74) Representative: Kransell & Wennborg KB

(57) **Abstract**

A computer system comprising processing circuitry configured to estimate a clutch slipping point position (Xₛₚ) of a clutch in a powertrain, by:
- controlling the powertrain to a first operating condition in which a prime mover is running and in which rotation of a torque transferring shaft of a gearbox is prevented by a braking component different from the clutch,
- controlling the clutch to move from a first clutch position towards a second clutch position, wherein the first clutch position is a disengaged or an engaged clutch position,
- detecting that torque applied by the prime mover meets a predetermined first torque criterion, and in response thereto register an associated clutch position (X_{b}), in which the clutch is positioned when the first torque criterion is met,
- estimating the clutch slipping point position based on a known clutch torque transfer characteristics and the registered clutch position.

## Description

### TECHNICAL FIELD

The disclosure relates generally to estimation of a clutch slipping point position of a clutch in a powertrain. In particular aspects, the disclosure relates to a method and a computer system for estimating the clutch slipping point position. The disclosure can be applied to heavy-duty vehicles, such as trucks, buses, and construction equipment, among other vehicle types. Although the disclosure may be described with respect to a particular vehicle, the disclosure is not restricted to any particular vehicle.

### BACKGROUND

In vehicle gearboxes, also known as transmissions, the clutch slipping point position may be important to know to be able to control the clutch accurately during, e.g., take-off and shifting. The clutch slipping point position is typically the clutch position where a small defined torque is transferred, such as 30 Nm. Outside of this position the clutch can be regarded as disengaged, and inside this position the torque will increase according to a known characteristic.

The clutch slipping point position may typically be estimated by monitoring the acceleration of a gearbox input shaft while the clutch is moving slowly from a disengaged position towards an engaged position. However, this approach requires a functional gearbox speed sensor. In cases where the gearbox speed sensor is for some reason not functional, the determination of the clutch slipping point position fails and consequently, it will not be possible to engage a gear.

In view of the above, it is desired to provide an approach for determining the clutch slipping point position that does not rely on the gearbox speed sensor.

### SUMMARY

According to a first aspect of the disclosure, a computer system comprising processing circuitry configured to estimate a clutch slipping point position of a clutch in a powertrain is provided. The clutch is configured to selectively engage a prime mover of the powertrain to a gearbox, and the processing circuitry is configured to:
- control the powertrain to a first operating condition in which the prime mover is running and in which rotation of a torque transferring shaft of the gearbox is prevented by a braking component different from the clutch,
- during said control of the powertrain to the first operating condition, control the clutch to move from a first clutch position towards a second clutch position, wherein the first clutch position is one of a disengaged or an engaged clutch position,
- during the control of the clutch, monitor a torque applied by the prime mover,
- detect that the monitored torque meets a predetermined first torque criterion, and in response thereto register an associated clutch position, in which the clutch is positioned when the first torque criterion is met, and
- estimate the clutch slipping point position based on a known clutch torque transfer characteristics of the clutch and the registered clutch position.

The first aspect of the disclosure may seek to provide an in at least some aspect improved computer system for estimating the clutch slipping point position in a powertrain, such as in the powertrain of a vehicle. In particular, it may seek to provide a computer system that may be used to estimate the clutch slipping point position when a gearbox speed sensor, normally used for determining the clutch slipping point position, is broken or otherwise unavailable. A technical benefit may include that the clutch slipping point position may be determined without the use of a gearbox speed sensor. As a result, slipping point calibration may be carried out and it will be possible to engage a gear and drive the vehicle also when the gearbox speed sensor is malfunctioning.

Optionally in some examples, including in at least one preferred example, in the first operating condition of the powertrain, the processing circuitry is configured to control a gearbox brake to be applied to prevent rotation of the torque transferring shaft. A technical benefit may include that a well-defined brake torque may be applied to the gearbox to prevent rotation of the torque transferring shaft, improving accuracy of the estimation in comparison with, e.g., application of a brake torque by means of engaging a gear. Furthermore, application of the gearbox brake provides a safe way of preventing torque applied by the prime mover from being transferred to, e.g., drive wheels of the vehicle once the clutch is engaged.

Optionally in some examples, including in at least one preferred example, the first clutch position is a disengaged clutch position and the second clutch position is an engaged clutch position. A technical benefit may include that a safe starting condition for the estimation is achieved, with no risk of overheating the gearbox brake.

Optionally in some examples, including in at least one preferred example, the predetermined first torque criterion is considered met when the monitored torque passes a first threshold torque level. If the first clutch position is a disengaged clutch position, the first torque criterion is hence considered met when the monitored torque exceeds the first threshold torque level.

Optionally in some examples, including in at least one preferred example, the first threshold torque level corresponds to a torque value larger than a defined slipping point torque value, such as to a torque level between the defined slipping point torque value and a maximum brake torque of said braking component, including internal losses within the gearbox. A technical benefit may include that it can be ensured that the torque slipping point position is passed when starting from the disengaged clutch position.

Optionally in some examples, including in at least one preferred example, the processing circuitry is further configured to:
- control the clutch to move towards the disengaged clutch position once the first torque criterion has been met, and
- when the clutch has passed the estimated clutch slipping point position, control the powertrain to release the braking component. The torque should remain unchanged or essentially unchanged when releasing the braking component, hence it may be ensured that the estimated clutch slipping position has indeed been passed and the clutch is disengaged.

Optionally in some examples, including in at least one preferred example, the processing circuitry is configured to initiate the estimation of the clutch slipping point position by:
- determining that a clutch slipping point position calibration is necessary, and
- detecting that a gearbox speed sensor of the gearbox is malfunctioning. A technical benefit may include that the processing circuitry only initiates the estimation/calibration when necessary due to a malfunction of the gearbox speed sensor.

Optionally in some examples, including in at least one preferred example, the processing circuitry is configured to control the clutch to move with a known clutch speed. This enables accurate determination of the clutch slipping point position.

According to a second aspect of the disclosure, a vehicle comprising the computer system according to the first aspect is provided. The vehicle further comprises the powertrain, including the prime mover, the clutch and the gearbox.

According to a third aspect of the disclosure, a computer-implemented method for estimating a clutch slipping point position of a clutch in a powertrain is provided. The clutch is configured to selectively engage a prime mover of the powertrain to a gearbox. The method comprises:
- controlling, by processing circuitry of a computer system, the powertrain to a first operating condition in which the prime mover is running and in which rotation of a torque transferring shaft of the gearbox is prevented by a component different from the clutch,
- during said control of the powertrain to the first operating condition, controlling, by the processing circuitry, the clutch to move from a first clutch position towards a second clutch position, wherein the first clutch position is one of a disengaged or an engaged clutch position,
- during the control of the clutch, monitoring, by the processing circuitry, a torque applied by the prime mover,
- detecting, by the processing circuitry, that the monitored torque meets a predetermined first torque criterion, and in response thereto registering an associated clutch position, in which the clutch is positioned when the first torque criterion is met,
- estimating, by the processing circuitry, the clutch slipping point position based on a known clutch torque transfer characteristics of the clutch and the registered clutch position.

The third aspect of the disclosure may seek to provide an in at least some aspect improved method for estimating the clutch slipping point position in a powertrain, such as in the powertrain of a vehicle. In particular, it may seek to provide a method that may be used to estimate the clutch slipping point position when a gearbox speed sensor, normally used for determining the clutch slipping point position, is broken or otherwise unavailable. Advantageous embodiments and technical benefits of the proposed method largely correspond to those of the computer system according to the first aspect.

Optionally in some examples, including in at least one preferred example, in the first operating condition of the powertrain, the method comprises controlling, by the processing circuitry, a gearbox brake to be applied to prevent rotation of the torque transferring shaft.

Optionally in some examples, including in at least one preferred example, the first clutch position is a disengaged clutch position and the second clutch position is an engaged clutch position.

Optionally in some examples, including in at least one preferred example, the predetermined first torque criterion is considered met when the monitored torque passes a first threshold torque level.

Optionally in some examples, including in at least one preferred example, the first threshold torque level corresponds to a torque value larger than a defined slipping point torque value, such as to a torque level between the defined slipping point torque value and a maximum brake torque of said braking component, including internal losses within the gearbox.

Optionally in some examples, including in at least one preferred example, the method further comprises:
- controlling, by the processing circuitry, the clutch to move towards the disengaged clutch position once the first torque criterion has been met, and
- when the clutch has passed the estimated clutch slipping point position, controlling, by the processing circuitry, the powertrain to release the braking component.

Optionally in some examples, including in at least one preferred example, the method further comprises initiating the estimation of the clutch slipping point position by:
- determining, by the processing circuitry, that a clutch slipping point position calibration is necessary, and
- detecting, by the processing circuitry, that a gearbox speed sensor of the gearbox is malfunctioning.

Optionally in some examples, including in at least one preferred example, the controlling of the clutch comprises controlling the clutch to move with a known clutch speed.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

There are also disclosed herein computer systems, control units, code modules, computer-implemented methods, computer readable media, and computer program products associated with the above discussed technical benefits.

### BRIEF DESCRIPTION OF THE DRAWINGS

Examples are described in more detail below with reference to the appended drawings. The drawings are schematic and not necessarily drawn to scale.
**FIG. 1** is an exemplary vehicle according to an example.
**FIG. 2** is an exemplary powertrain according to an example.
**FIG. 3** is a flowchart illustrating a method according to an example.
**FIG. 4** is a diagram showing torque as a function of clutch position according to an example.
**FIG. 5** is a schematic diagram of an exemplary computer system for implementing examples disclosed herein, according to an example.

### DETAILED DESCRIPTION

The detailed description set forth below provides information and examples of the disclosed technology with sufficient detail to enable those skilled in the art to practice the disclosure.

The clutch slipping point position within a vehicle powertrain may be important to know in order to be able to control the clutch accurately during, e.g., take-off and shifting. This may be particularly important for automated mechanical transmissions (AMT), which are commonly used in, e.g., trucks. The clutch slipping point position is the position of the clutch at which a defined slipping point torque is transferred via the clutch. The defined slipping point torque should be a relatively small torque, such as 30 Nm. Outside of this position the clutch can be regarded as disengaged, and inside this position the torque will increase according to a known characteristic.

The clutch slipping point position may in a calibration process typically be estimated by monitoring the acceleration of a gearbox input shaft while the clutch is moving slowly from a disengaged position towards an engaged position. A gearbox speed sensor may be used to monitor the acceleration of the gearbox input shaft during the calibration process. Hence, this approach requires a functional gearbox speed sensor. In cases where the gearbox speed sensor is for some reason not functional, the determination of the clutch slipping point position fails and consequently, it will not be possible to engage a gear of the gearbox and the vehicle cannot be driven.

The present disclosure aims at providing ways of estimating the clutch slipping point position without using any gearbox speed sensor. According to the disclosure, this is achieved by using monitoring a torque applied by a prime mover, such as an engine or an electric motor, while slowly moving the clutch, in a controlled manner, between a disengaged and an engaged position during application of a brake torque to the gearbox. This enables estimation of a clutch slipping point position without using a gearbox speed sensor, and is therefore useful whenever the gearbox speed sensor is for some reason not useable.

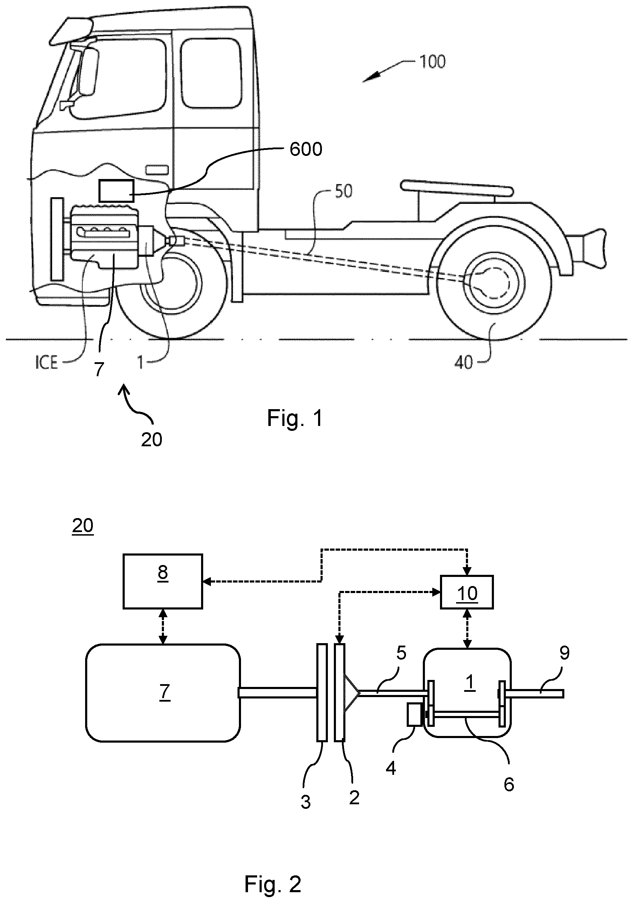

**FIG. 1** is a schematic side view of a vehicle 100 in the form of a heavy-duty towing truck according to an example. The vehicle 100 comprises a powertrain 20 in which a gearbox 1 is drivingly connected to a prime mover 7 in the form of an internal combustion engine (ICE). The gearbox 1 may for example be an AMT. Even though an ICE is shown as the prime mover 7, the present invention is also applicable to other prime movers, and combinations thereof, such one or more electric motors drivingly connected to the gearbox 1 in addition to, or as an alternative to, the ICE. The gearbox 1 is in this example drivingly connected to a propeller shaft 50, which is configured to transfer torque to rear wheels 40. The vehicle 100 further comprises a computer system 600, comprising processing circuitry (now shown) configured to estimate the clutch slipping point position using a method according to the disclosure. Even though a vehicle 100 in the form of a truck is shown, the present invention is applicable to any type of vehicle, such as a bus, a construction equipment vehicle, a passenger car, another type of truck, or the like.

**FIG. 2** schematically illustrates a powertrain 20 comprising a prime mover 7, a gearbox 1, a flywheel 3, and a clutch 2. The clutch 2 is configured to selectively engage the prime mover 7 to the flywheel 3, in turn drivingly connected to the prime mover 7. The clutch 2 is in turn drivingly connected to the gearbox 1 via a gearbox input shaft 5. The gearbox 1 may comprise a plurality of selectable gears (now shown) for transferring torque from the input shaft 5 to an output shaft 9, in the illustrated example via a countershaft 6. A gearbox brake 4 is provided, configured to apply a brake torque to the countershaft 6 such that rotation of the countershaft 6 is prevented. An electronic gearbox control unit 10 is provided for controlling the gearbox, including the gearbox brake 4. An electronic engine control unit 8 is further provided for controlling the engine 7. The engine control unit 8 is communicatively connected to the gearbox control unit 10 such that signals and data may be transmitted between the control units 8, 10.

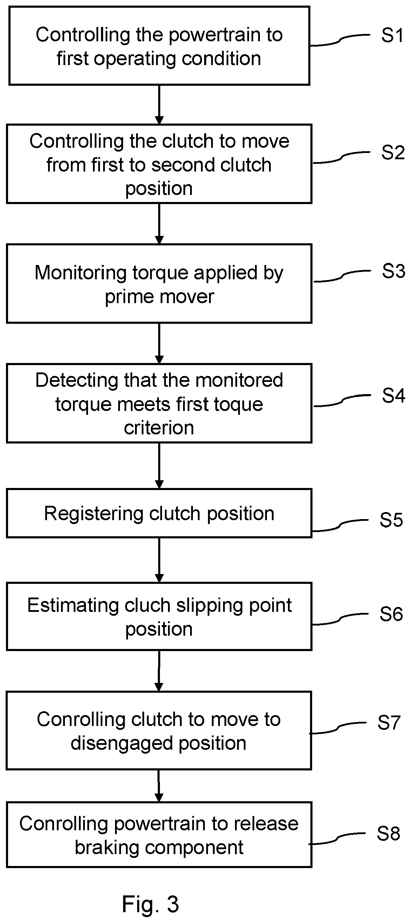

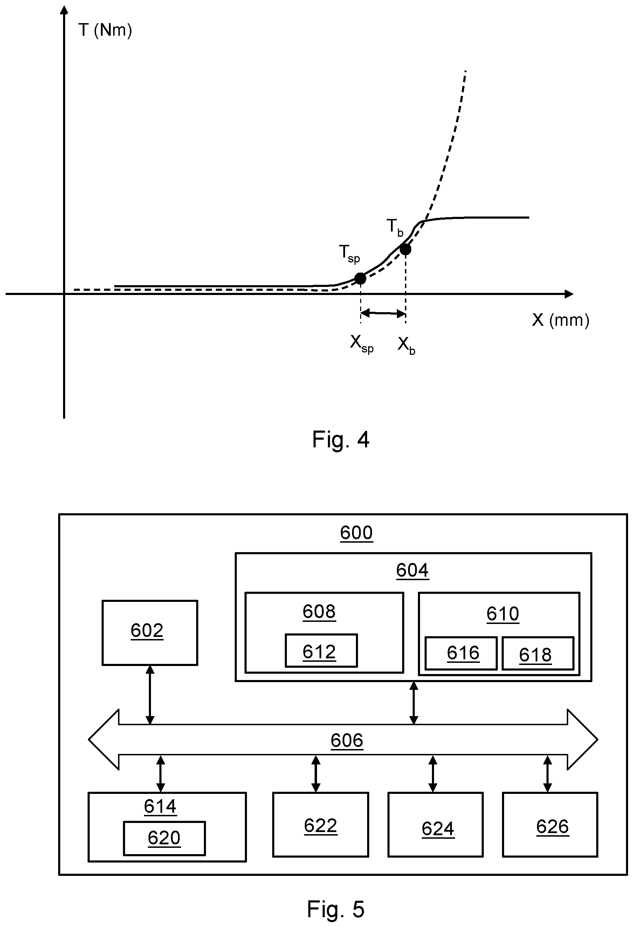

**FIG. 3** is a flow chart illustrating a method for estimating the clutch slipping point position Xₛₚ of a clutch according to an example of the disclosure, such as of the clutch 2 illustrated in FIG. 2. Reference is also made to **FIG. 4****,** illustrating clutch torque T as a function of clutch position X during the clutch slipping point position estimation procedure. The solid line illustrates estimated engine torque and the dashed line illustrates a known clutch torque transfer characteristic. The method may be carried out by the processing circuitry of a computer system 600, such as within any one of the control units 8, 10 illustrated in FIG. 2, or within another control unit or processing device communicatively connected to the control units 8, 10. The method comprises the following actions S1-S7:
**S1**: Controlling the powertrain 20 to a first operating condition in which the prime mover 7 is running and in which rotation of a torque transferring shaft of the gearbox 1, such as of the output shaft 9 and/or of the countershaft 6, is prevented by a component different from the clutch 2. For example, the gearbox brake 4 may be applied. The prime mover 7 may in the first operating condition be controlled by the engine control unit 8 to rotate with a specific rotational speed. Hence, when the clutch 2 is engaged, the prime mover 7 will apply a torque to the gearbox 1 that depends on the load on the gearbox 1. By applying a load in the form of a brake torque to the gearbox 1 by the gearbox brake 4, the engine torque needed to start rotating the gearbox 1 once the clutch 2 is engaged will be increased in comparison with a scenario in which no brake torque is applied. The clear increase in engine torque will make it easier to detect whether the clutch 2 is engaged or not. An alternative to use the gearbox brake 4 is to engage a high gear, but this requires that a wheel brake is applied at the same time, preventing the vehicle 100 from starting to move if the engine torque overcomes the brake torque provided by the engaged gear. With the gearbox brake 4 applied, the gearbox 1 can remain in a neutral gear during the entire clutch slipping point position estimation procedure, thus avoiding the risk of unwanted vehicle movement.
**S2:** During said control of the powertrain 20 to the first operating condition, controlling the clutch 2 to move from a first clutch position towards a second clutch position, wherein the first clutch position is one of a disengaged or an engaged clutch position. Preferably, to avoid the risk of damage to the gearbox 1, the first clutch position may be the disengaged clutch position in which the clutch 2 does not transfer any torque from the prime mover 7 to the gearbox input shaft 5. The second clutch position is in this case the engaged clutch position. However, it is also possible to start with the clutch 2 in the engaged clutch position and move towards the disengaged position. In both cases, the clutch 2 should be controlled to move with a known clutch speed, such that its position can be determined as a function of time, unless a position sensor or similar is provided that can detect the position of the clutch 2 and provide information relating thereto to the control unit 10.
**S3:** During the control of the clutch 2, monitoring a torque applied by the prime mover 7, i.e., the engine torque. As discussed above, the torque will increase as the clutch 2 is engaged and decrease as the clutch 2 is disengaged. The engine torque may be estimated by the engine control unit 8 and communicated to any other control unit performing the clutch slipping point position estimation, such as the gearbox control unit 10.
**S4:** Detecting that the monitored torque meets a predetermined first torque criterion. The predetermined first torque criterion may be considered met when the monitored torque passes a first threshold torque level T_{b}, which may be a torque value larger than the defined slipping point torque value Tₛₚ as illustrated in FIG. 4. The first threshold torque level T_{b} may preferably be a torque level between the defined slipping point torque value Tₛₚ and a maximum brake torque of the braking component, such as of the gearbox brake 4, including internal losses within the gearbox 1. Overheating of the gearbox brake 4 may thereby be avoided. The maximum brake torque as well as internal losses within the gearbox 1 are usually well-known.
**S5:** In response to the detecting of that the first torque criterion is met, registering an associated clutch position X_{b}, in which the clutch 2 is positioned when the first torque criterion is met. In FIG. 4, this corresponds to the position X_{b} at which the monitored torque equals the first threshold torque level T_{b}.
**S6:** Estimating the clutch slipping point position Xₛₚ based on the known clutch torque transfer characteristics of the clutch 2 and the registered clutch position X_{b}. The known appearance of the torque transfer characteristics, together with the detected and registered clutch position X_{b} at which the estimated monitored engine torque equals the first threshold torque level T_{b}, enable determination of the clutch position at which the estimated monitored torque equals Tsp, i.e., the clutch slipping point position Xₛₚ. To improve an accuracy of the estimation, friction losses arising in the prime mover 7 due to, e.g., an air compressor, a generator, an air conditioning system, or other auxiliary devices, should be taken into account. The engine friction losses may be well-known. In FIG. 4, the friction losses result in the slightly displaced engine torque curve as compared to the torque transfer characteristics.

The method may further comprise an action **S7** of controlling the clutch 2 to move towards the disengaged clutch position once the first torque criterion has been met, such as once the first threshold torque level T_{b} has been reached or slightly thereafter. In a subsequent action **S8,** when the clutch 2 has passed the estimated clutch slipping point position Xₛₚ during the disengagement process, the method may comprise controlling the powertrain 20 to release the braking component, such as the gearbox brake 4. The monitored torque should at this point remain essentially the same, since the clutch 2 should now be disengaged and the release of the gearbox brake 4 should not affect the monitored torque. If the monitored torque does not return to zero or to a value corresponding only to friction losses within the prime mover 7 after disengaging the clutch 2, the clutch slipping point position estimation procedure may need to be repeated.

The method may comprise initiating the estimation of the clutch slipping point position Xₛₚ by determining that a clutch slipping point position calibration is necessary, and detecting that a gearbox speed sensor of the gearbox 1 is malfunctioning. The method should be carried out when the vehicle 100 is standing still, such as during service or at another occasion when the vehicle 100 is not being driven.

**FIG. 5** is a schematic diagram of a computer system **600** for implementing examples disclosed herein. The computer system **600** is adapted to execute instructions from a computer-readable medium to perform these and/or any of the functions or processing described herein. The computer system **600** may be connected (e.g., networked) to other machines in a LAN (Local Area Network), LIN (Local Interconnect Network), automotive network communication protocol (e.g., FlexRay), an intranet, an extranet, or the Internet. While only a single device is illustrated, the computer system **600** may include any collection of devices that individually or jointly execute a set (or multiple sets) of instructions to perform any one or more of the methodologies discussed herein. Accordingly, any reference in the disclosure and/or claims to a computer system, computing system, computer device, computing device, control system, control unit, electronic control unit (ECU), processor device, processing circuitry, etc., includes reference to one or more such devices to individually or jointly execute a set (or multiple sets) of instructions to perform any one or more of the methodologies discussed herein. For example, control system may include a single control unit or a plurality of control units connected or otherwise communicatively coupled to each other, such that any performed function may be distributed between the control units as desired. Further, such devices may communicate with each other or other devices by various system architectures, such as directly or via a Controller Area Network (CAN) bus, etc.

The computer system **600** may comprise at least one computing device or electronic device capable of including firmware, hardware, and/or executing software instructions to implement the functionality described herein. The computer system **600** may include processing circuitry **602** (e.g., processing circuitry including one or more processor devices or control units), a memory **604,** and a system bus **606.** The computer system **600** may include at least one computing device having the processing circuitry **602.** The system bus **606** provides an interface for system components including, but not limited to, the memory **604** and the processing circuitry **602.** The processing circuitry **602** may include any number of hardware components for conducting data or signal processing or for executing computer code stored in memory **604.** The processing circuitry **602** may, for example, include a general-purpose processor, an application specific processor, a Digital Signal Processor (DSP), an Application Specific Integrated Circuit (ASIC), a Field Programmable Gate Array (FPGA), a circuit containing processing components, a group of distributed processing components, a group of distributed computers configured for processing, or other programmable logic device, discrete gate or transistor logic, discrete hardware components, or any combination thereof designed to perform the functions described herein. The processing circuitry **602** may further include computer executable code that controls operation of the programmable device.

The system bus **606** may be any of several types of bus structures that may further interconnect to a memory bus (with or without a memory controller), a peripheral bus, and/or a local bus using any of a variety of bus architectures. The memory **604** may be one or more devices for storing data and/or computer code for completing or facilitating methods described herein. The memory **604** may include database components, object code components, script components, or other types of information structure for supporting the various activities herein. Any distributed or local memory device may be utilized with the systems and methods of this description. The memory **604** may be communicably connected to the processing circuitry **602** (e.g., via a circuit or any other wired, wireless, or network connection) and may include computer code for executing one or more processes described herein. The memory **604** may include non-volatile memory **608** (e.g., read-only memory (ROM), erasable programmable read-only memory (EPROM), electrically erasable programmable read-only memory (EEPROM), etc.), and volatile memory **610** (e.g., random-access memory (RAM)), or any other medium which can be used to carry or store desired program code in the form of machine-executable instructions or data structures and which can be accessed by a computer or other machine with processing circuitry **602.** A basic input/output system (BIOS) **612** may be stored in the non-volatile memory **608** and can include the basic routines that help to transfer information between elements within the computer system **600.**

The computer system **600** may further include or be coupled to a non-transitory computer-readable storage medium such as the storage device **614,** which may comprise, for example, an internal or external hard disk drive (HDD) (e.g., enhanced integrated drive electronics (EIDE) or serial advanced technology attachment (SATA)), HDD (e.g., EIDE or SATA) for storage, flash memory, or the like. The storage device **614** and other drives associated with computer-readable media and computer-usable media may provide non-volatile storage of data, data structures, computer-executable instructions, and the like.

Computer-code which is hard or soft coded may be provided in the form of one or more modules. The module(s) can be implemented as software and/or hard-coded in circuitry to implement the functionality described herein in whole or in part. The modules may be stored in the storage device **614** and/or in the volatile memory **610,** which may include an operating system **616** and/or one or more program modules **618.** All or a portion of the examples disclosed herein may be implemented as a computer program **620** stored on a transitory or non-transitory computer-usable or computer-readable storage medium (e.g., single medium or multiple media), such as the storage device **614,** which includes complex programming instructions (e.g., complex computer-readable program code) to cause the processing circuitry **602** to carry out actions described herein. Thus, the computer-readable program code of the computer program **620** can comprise software instructions for implementing the functionality of the examples described herein when executed by the processing circuitry **602.** In some examples, the storage device **614** may be a computer program product (e.g., readable storage medium) storing the computer program **620** thereon, where at least a portion of a computer program **620** may be loadable (e.g., into a processor) for implementing the functionality of the examples described herein when executed by the processing circuitry **602.** The processing circuitry **602** may serve as a controller or control system for the computer system **600** that is to implement the functionality described herein.

The computer system **600** may include an input device interface **622** configured to receive input and selections to be communicated to the computer system **600** when executing instructions, such as from a keyboard, mouse, touch-sensitive surface, etc. Such input devices may be connected to the processing circuitry **602** through the input device
interface **622** coupled to the system bus **606** but can be connected through other interfaces, such as a parallel port, an Institute of Electrical and Electronic Engineers (IEEE) 1394 serial port, a Universal Serial Bus (USB) port, an IR interface, and the like. The computer system **600** may include an output device interface **624** configured to forward output, such as to a display, a video display unit (e.g., a liquid crystal display (LCD) or a cathode ray tube (CRT)). The computer system **600** may include a communications interface **626** suitable for communicating with a network as appropriate or desired.

The operational actions described in any of the exemplary aspects herein are described to provide examples and discussion. The actions may be performed by hardware components, may be embodied in machine-executable instructions to cause a processor to perform the actions, or may be performed by a combination of hardware and software. Although a specific order of method actions may be shown or described, the order of the actions may differ. In addition, two or more actions may be performed concurrently or with partial concurrence.

In the following, a list of numbered examples of various aspects of the disclosure is provided.

Example 1. A computer system (600) comprising processing circuitry (602) configured to estimate a clutch slipping point position (Xₛₚ) of a clutch (2) in a powertrain (20), the clutch (2) being configured to selectively engage a prime mover (7) of the powertrain (20) to a gearbox (1), the processing circuitry (602) being configured to:
- control the powertrain (20) to a first operating condition in which the prime mover (7) is running and in which rotation of a torque transferring shaft (6) of the gearbox (1) is prevented by a braking component (4) different from the clutch (2),
- during said control of the powertrain (20) to the first operating condition, control the clutch (2) to move from a first clutch position towards a second clutch position, wherein the first clutch position is one of a disengaged or an engaged clutch position,
- during the control of the clutch (2), monitor a torque applied by the prime mover (7),
- detect that the monitored torque meets a predetermined first torque criterion, and in response thereto register an associated clutch position (X_{b}), in which the clutch (2) is positioned when the first torque criterion is met,
- estimate the clutch slipping point position (Xₛₚ) based on a known clutch torque transfer characteristics of the clutch (2) and the registered clutch position (X_{b}).

Example 2. The computer system of example 1, wherein, in the first operating condition of the powertrain (20), the processing circuitry (602) is configured to control a gearbox brake (4) to be applied to prevent rotation of the torque transferring shaft (6).

Example 3. The computer system of example 1 or 2, wherein the first clutch position is a disengaged clutch position and the second clutch position is an engaged clutch position.

Example 4. The computer system of any one of the preceding examples, wherein the predetermined first torque criterion is considered met when the monitored torque passes a first threshold torque level (T_{b}).

Example 5. The computer system of example 4, wherein the first threshold torque level (T_{b}) corresponds to a torque value larger than a defined slipping point torque value (Tₛₚ), such as to a torque level between the defined slipping point torque value (Tₛₚ) and a maximum brake torque of said braking component, including internal losses within the gearbox (1).

Example 6. The computer system of example 4 or 5, wherein the processing circuitry (602) is further configured to:
- control the clutch (2) to move towards the disengaged clutch position once the first torque criterion has been met, and
- when the clutch (2) has passed the estimated clutch slipping point position, control the powertrain (20) to release the braking component (4).

Example 7. The computer system of any one of the preceding examples, wherein the processing circuitry (620) is configured to initiate the estimation of the clutch slipping point position (Xₛₚ) by:
- determining that a clutch slipping point position calibration is necessary, and
- detecting that a gearbox speed sensor of the gearbox (1) is malfunctioning.

Example 8. The computer system of any one of the preceding examples, wherein the processing circuitry (602) is configured to control the clutch (2) to move with a known clutch speed.

Example 9. A powertrain (20) comprising a prime mover (7), a gearbox (1), and a clutch (2) configured to selectively engage the prime mover (7) to the gearbox (1), the powertrain (20) further comprising the computer system of any of examples 1-8.

Example 10. A vehicle (100) comprising the computer system (600) of any of examples 1-8, or the powertrain (20) of example 9.

Example 11. A computer-implemented method for estimating a clutch slipping point position (Xₛₚ) of a clutch (2) in a powertrain (20), the clutch (2) being configured to selectively engage a prime mover (7) of the powertrain (20) to a gearbox (1), the method comprising:
- controlling (S1), by processing circuitry (602) of a computer system (600), the powertrain (20) to a first operating condition in which the prime mover (7) is running and in which rotation of an output shaft (9) of the gearbox (1) is prevented by a component different from the clutch,
- during said control of the powertrain to the first operating condition, controlling (S2), by the processing circuitry, the clutch to move from a first clutch position towards a second clutch position, wherein the first clutch position is one of a disengaged or an engaged clutch position,
- during the control of the clutch, monitoring (S3), by the processing circuitry, a torque applied by the prime mover,
- detecting (S4), by the processing circuitry, that the monitored torque meets a predetermined first torque criterion, and in response thereto registering (S5) an associated clutch position, in which the clutch is positioned when the first torque criterion is met,
- estimating (S6), by the processing circuitry, the clutch slipping point position based on a known clutch torque transfer characteristics of the clutch and the registered clutch position.

Example 12. The method of example 11, wherein, in the first operating condition of the powertrain, the method comprises controlling, by the processing circuitry, a gearbox brake (4) to be applied to prevent rotation of the torque transferring shaft.

Example 13. The method of example 11 or 12, wherein the first clutch position is a disengaged clutch position and the second clutch position is an engaged clutch position.

Example 14. The method of any one of examples 11-13, wherein the predetermined first torque criterion is considered met when the monitored torque passes a first threshold torque level (T_{b}).

Example 15. The method of example 14, wherein the first threshold torque level (T_{b}) corresponds to a torque value larger than a defined slipping point torque value (Tₛₚ), such as to a torque level between the defined slipping point torque value (Tₛₚ) and a maximum brake torque of said braking component, including internal losses within the gearbox (1).

Example 16. The method of example 14 or 15, further comprising:
- controlling (S7), by the processing circuitry, the clutch (2) to move towards the disengaged clutch position once the first torque criterion has been met, and
- when the clutch (2) has passed the estimated clutch slipping point position (Xₛₚ), controlling (S8), by the processing circuitry, the powertrain (20) to release the braking component (4).

Example 17. The method of any one of examples 11-16, further comprising initiating the estimation of the clutch slipping point position (Xₛₚ) by:
- determining, by the processing circuitry, that a clutch slipping point position calibration is necessary, and
- detecting, by the processing circuitry, that a gearbox speed sensor of the gearbox (1) is malfunctioning.

Example 18. The method of any one of examples 11-17, wherein the controlling of the clutch (2) comprises controlling the clutch (2) to move with a known clutch speed.

Example 19. A computer program product comprising program code for performing, when executed by the processing circuitry (602), the method of any of examples 11-18.

Example 20. A non-transitory computer-readable storage medium (614) comprising instructions, which when executed by the processing circuitry (602), cause the processing circuitry to perform the method of any of examples 11-18.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

## Claims

1. A computer system (600) comprising processing circuitry (602) configured to estimate a clutch slipping point position (Xₛₚ) of a clutch (2) in a powertrain (20), the clutch (2) being configured to selectively engage a prime mover (7) of the powertrain (20) to a gearbox (1), the processing circuitry (602) being configured to:
- control the powertrain (20) to a first operating condition in which the prime mover (7) is running and in which rotation of a torque transferring shaft (6) of the gearbox (1) is prevented by a braking component (4) different from the clutch (2),
- during said control of the powertrain (20) to the first operating condition, control the clutch (2) to move from a first clutch position towards a second clutch position, wherein the first clutch position is one of a disengaged or an engaged clutch position,
- during the control of the clutch (2), monitor a torque applied by the prime mover (7),
- detect that the monitored torque meets a predetermined first torque criterion, and in response thereto register an associated clutch position (X_{b}), in which the clutch (2) is positioned when the first torque criterion is met,
- estimate the clutch slipping point position (Xₛₚ) based on a known clutch torque transfer characteristics of the clutch (2) and the registered clutch position (X_{b}).

2. The computer system of claim 1, wherein, in the first operating condition of the powertrain (20), the processing circuitry (602) is configured to control a gearbox brake (4) to be applied to prevent rotation of the torque transferring shaft (6).

3. The computer system of claim 1 or 2, wherein the first clutch position is a disengaged clutch position and the second clutch position is an engaged clutch position.

4. The computer system of any one of the preceding claims, wherein the predetermined first torque criterion is considered met when the monitored torque passes a first threshold torque level (T_{b}).

5. The computer system of claim 4, wherein the first threshold torque level (T_{b}) corresponds to a torque value larger than a defined slipping point torque value (Tₛₚ), such as to a torque level between the defined slipping point torque value (Tₛₚ) and a maximum brake torque of said braking component, including internal losses within the gearbox (1).

6. The computer system of claim 4 or 5, wherein the processing circuitry (602) is further configured to:
- control the clutch (2) to move towards the disengaged clutch position once the first torque criterion has been met, and
- when the clutch (2) has passed the estimated clutch slipping point position, control the powertrain (20) to release the braking component (4).

7. The computer system of any one of the preceding claims, wherein the processing circuitry (620) is configured to initiate the estimation of the clutch slipping point position (Xₛₚ) by:
- determining that a clutch slipping point position calibration is necessary, and
- detecting that a gearbox speed sensor of the gearbox (1) is malfunctioning.

8. The computer system of any one of the preceding claims, wherein the processing circuitry (602) is configured to control the clutch (2) to move with a known clutch speed.

9. A vehicle (100) comprising the computer system (600) of any of claims 1-8.

10. A computer-implemented method for estimating a clutch slipping point position (Xₛₚ) of a clutch (2) in a powertrain (20), the clutch (2) being configured to selectively engage a prime mover (7) of the powertrain (20) to a gearbox (1), the method comprising:
- controlling (S 1), by processing circuitry (602) of a computer system (600), the powertrain (20) to a first operating condition in which the prime mover (7) is running and in which rotation of an output shaft (9) of the gearbox (1) is prevented by a component different from the clutch,
- during said control of the powertrain to the first operating condition, controlling (S2), by the processing circuitry, the clutch to move from a first clutch position towards a second clutch position, wherein the first clutch position is one of a disengaged or an engaged clutch position,
- during the control of the clutch, monitoring (S3), by the processing circuitry, a torque applied by the prime mover,
- detecting (S4), by the processing circuitry, that the monitored torque meets a predetermined first torque criterion, and in response thereto registering (S5) an associated clutch position, in which the clutch is positioned when the first torque criterion is met,
- estimating (S6), by the processing circuitry, the clutch slipping point position based on a known clutch torque transfer characteristics of the clutch and the registered clutch position.

11. The method of claim 10, wherein the predetermined first torque criterion is considered met when the monitored torque passes a first threshold torque level (T_{b}).

12. The method of claim 11, further comprising:
- controlling (S7), by the processing circuitry, the clutch (2) to move towards the disengaged clutch position once the first torque criterion has been met, and
- when the clutch (2) has passed the estimated clutch slipping point position (Xₛₚ), controlling (S8), by the processing circuitry, the powertrain (20) to release the braking component (4).

13. The method of any one of claims 10-12, further comprising initiating the estimation of the clutch slipping point position (Xₛₚ) by:
- determining, by the processing circuitry, that a clutch slipping point position calibration is necessary, and
- detecting, by the processing circuitry, that a gearbox speed sensor of the gearbox (1) is malfunctioning.

14. A computer program product comprising program code for performing, when executed by the processing circuitry (602), the method of any of claims 10-13.

15. A non-transitory computer-readable storage medium (614) comprising instructions, which when executed by the processing circuitry (602), cause the processing circuitry to perform the method of any of claims 10-13.
